# EUROPÄISCHE PATENTSCHRIFT

(11) **EP 1 885 470 B1**
(45) Veröffentlichungstag und Bekanntmachung des Hinweises auf die Patenterteilung: **13.10.2010**
(21) Anmeldenummer: 06724451.7
(22) Anmeldetag: 20.04.2006
(51) Int. Cl.: B01D 25/28

(54) **MEMBRANPLATTE FÜR EINE FILTERPRESSE**
MEMBRANE PLATE FOR A FILTER PRESS
PLAQUE A MEMBRANE POUR FILTRE-PRESSE

(30) Priorität: 25.04.2005 DE 202005006681 U
(43) Veröffentlichungstag der Anmeldung: 13.02.2008
(73) Patentinhaber: JVK Filtration Systems GmbH, 91166 Georgensgmünd (DE)
(72) Erfinder: HERMANN, Manfred, 90491 Nürnberg (DE)
(74) Vertreter: Tergau, Enno
(86) Internationale Anmeldenummer: PCT/EP2006/003616
(87) Internationale Veröffentlichungsnummer: WO 2006/114235

(56) Entgegenhaltungen:
- FR-A- 2 623 420
- US-A- 3 289 845

## Beschreibung

Die Erfindung betrifft eine Membranplatte für eine Kammerfilterpresse. Bei derartigen Kammerfilterpressen sind die Filterkammern dadurch gebildet, dass zwei Filterplatten nebeneinander angeordnet sind. Die Filterplatten weisen einen gegenüber dem Plattenkörper deutlich verdickten Plattenrand auf. Mit dem Plattenrand liegen die einander benachbarten Filterplatten aneinander und bilden innerhalb der Ränder aufgrund des gegenüber den Plattenrändern zurückspringenden Plattenkörpers jeweils eine Filterkammer. Nach dem Auspressen der auszupressenden Substanz wird ein flüssiges Filtrat in bekannter Weise durch Ablaufbohrungen in der Filterplatte abgeleitet. In der Filterkammer bleibt ein ausgepresster Filterkuchen zurück. Dieser Filterkuchen wird dadurch entfernt, dass die beiden die Filterkammer bildenden Filterplatten auseinander gefahren werden, so dass ihre Randbereiche nicht mehr aneinander anliegen. Die an der mindestens einen die Filterkammer bildenden Filterplatte angebrachte Membran wird in Schwingung versetzt und stößt so den Filterkuchen aus.

Austauschbare Membrane sind mit Hilfe einer Nut-Feder-Verbindung formschlüssig am Plattengrundkörper im Bereich des Plattenrandes fixiert. Unter Berücksichtigung der Fertigungstoleranzen, der Schrumpfung bei der Fertigung und bei den Pressvorgängen innerhalb der Filterpresse infolge des hohen Wärmeausdehnungskoeffizienten von thermoplastischen Kunststoffen bzw. Elastomeren muss die Membran eine ausreichende Flexibilität aufweisen, um problemlos an der Filterplatte befestigt werden zu können. Dieser Notwendigkeit der Flexibilität steht jedoch in vielen Anwendungsfällen die Notwendigkeit entgegen, die Membran aus einem harten Thermoplast fertigen zu müssen. Harte Thermoplaste werden üblicherweise eingesetzt bei hohen Temperaturen, hohen Filtrationsdrücken, hohen Auspressdrücken und hoher chemischer Beanspruchung der Filterplatte und ihrer Membran.

Aus der FR 2 623 420 A ist eine Membranfilterplatte für eine Filterpresse mit einer, in einer mehrschichtigen Filterplatte fixierten Membran offenbart. Die Membran besteht aus einer elastischen Trägerschicht und aus einer Funktionsschicht, die aus einem anderen Material bestehen kann als die Trägerschicht.

Die US 3 289 845 A beschreibt Filterpressen mit Membranfilterplatten, die ebenfalls aus mehreren verschiedenen Schichten bestehen.

Ausgehend von den genannten Problemen liegt der Erfindung die Aufgabe zugrunde, eine Filterplatte so auszugestalten, dass eine harte und unelastische Membran gleichwohl an der Filterplatte leicht montierbar ist.

Zur Lösung dieser Aufgabe sieht die Erfindung eine sandwichartig aufgebaute Membran vor. Die Membran besteht aus einer dicken und flexiblen Trägerschicht und einer dünnen auf die Trägerschicht aufgebrachten Funktionsschicht. Die Funktionsschicht besteht dabei aus dem harten, resistenten Material, welches hohen Temperaturen, hohen Drücken oder hohen chemischen Belastungen ohne weiteres standhält. In vorteilhafter Ausgestaltung kann die Trägerschicht eine Dicke von 3 bis 4 mm aufweisen, während die Funktionsschicht demgegenüber nur eine Stärke von 0,5 mm aufweist.

Dehnungen oder Spannungen werden bei dieser erfindungsmäßigen Membran von der elastischen Trägerschicht gleichsam aufgefangen. Die Funktionsschicht muss keine Kräfte übertragen. Sie kann sich auf ihre Schutzfunktion beschränken. Die Funktionsschicht und die Trägerschicht können beispielsweise durch Schweißen miteinander verbunden sein. Auch ist es möglich, die Funktionsschicht auf eine geeignete Trägerschicht aufzuspritzen.

Die Randbereiche der Membran sind ausschließlich aus dem Trägermaterial der Trägerschicht zu fertigen und die Funktionsschicht sind auf das beim Pressen belastete Plattenzentrum zu konzentrieren.

Anhand des in den Zeichnungen dargestellten Ausführungsbeispiels ist die Erfindung näher erläutert.
- Fig. 1: zeigt die Aufsicht auf eine Kammerseite einer erfindungsmäßigen Filter- platte mit teilweise dargestellter Membran,
- Fig. 2: zeigt den Schnitt II-II in Fig. 1.

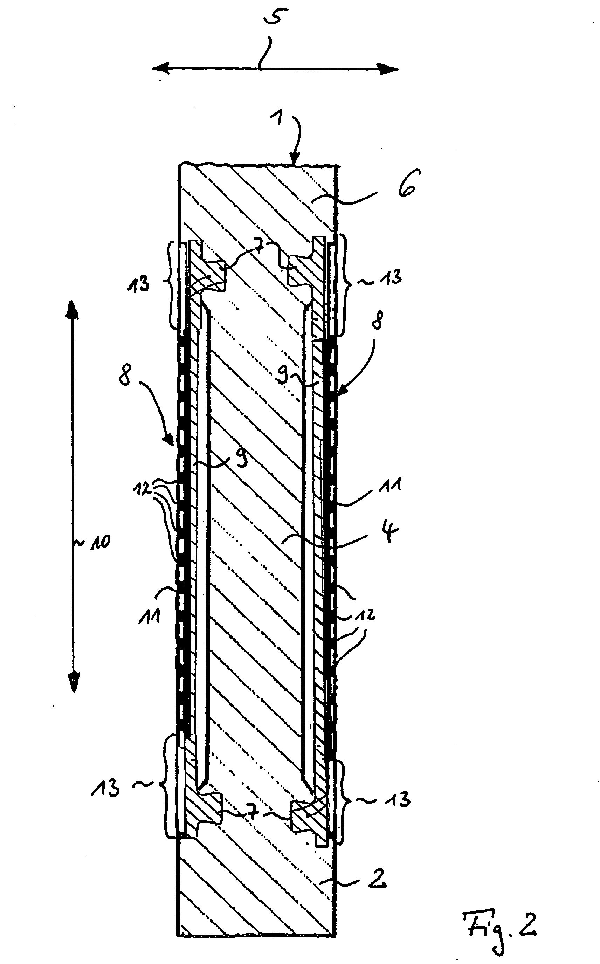

Die Filterplatte 1 weist den umlaufenden Plattenrand 2 auf, in welchen Filtratbohrungen 3 eingebracht sind. Der um die Filterplatte 1 umlaufende Plattenrand 2 begrenzt in sich den von der Plattenoberfläche gebildeten Kammerboden 4. Aus dem Kammerboden 4 springt der Plattenrand 2 in Plattenquerrichtung 5 hervor, was in Fig. 2 deutlich erkennbar ist. Die Dicke des Plattenrandes 2 in Plattenquerrichtung 5 ist folglich sehr viel größer als die in Plattenquerrichtung 5 gemessene Dicke des Kammerbodens 4. In Plattenquerrichtung 5 stehen aus dem Kammerbogen 4 noch Stütznocken 6 hervor. Die Stütznocken 6 dienen zur Abstützung des Kammerbodens 4 an entsprechenden Stütznocken des gegenüberliegenden Kammerbodens der benachbarten Filterplatte. Auf diese Weise soll ein Durchbiegen des Kammerbodens 4 während des Filtervorgangs in der Filterpresse vermieden werden.

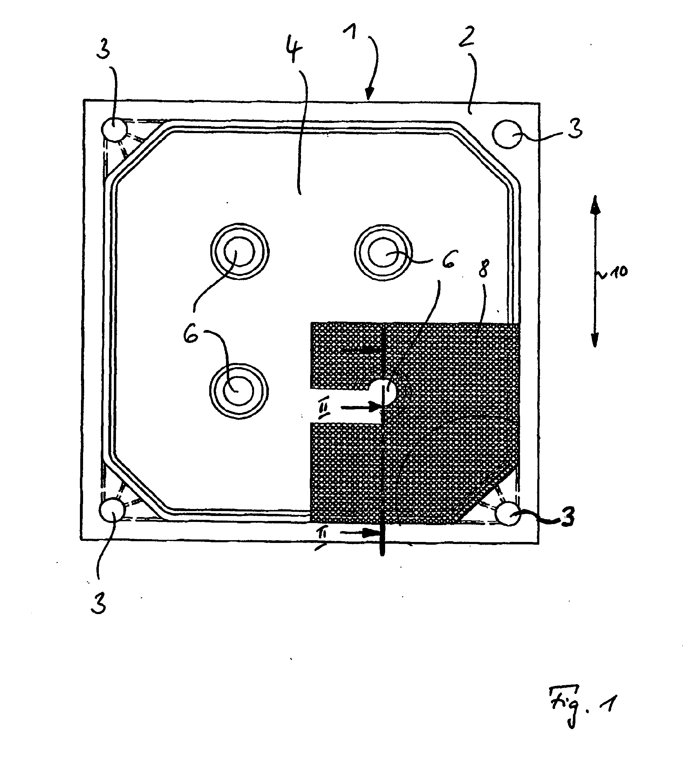

Mit Hilfe der Formvorsprünge 7 ist die in Fig. 1 nur teilweise dargestellte Membran 8 in Befestigungsnuten sowohl des Plattenrandes 2 als auch des Stütznockens 6 beim Ausführungsbeispiel befestigt. Die Formvorsprünge 7 sind hierbei die Federn der Nut-Feder-Kombination, mit welcher die Membranplatte 8 an der Filterplatte 1 formschlüssig gelagert ist.

Die Membrane 8 hat die in Fig. 2 dargestellte elastische Trägerschicht 9. Die elastische Trägerschicht 9 erstreckt sich über die gesamte Länge der Membran 8 in der zur Plattenquerrichtung 5 senkrecht verlaufenden Plattenlängsrichtung 10. Im zentralen Bereich der Membran ist auf die Trägerschicht 9 die in Fig. 2 schwarz ausgezeichnete temperatur- und chemiebeständige Funktionsschicht 11 aufgebracht. Die Funktionsschicht 11 trägt hierbei eine aus Noppen 12 bestehende Profilierung als Drainage. Die Funktionsschicht 11 ist im Zentrum der Membran 8 so angebracht, dass die Randbereiche 13 der Membran 8 von der Funktionsschicht 11 bzw. der die Funktionsschicht 11 bildenden Beschichtung freigehalten sind. Die ausschließlich aus der elastischen Trägerschicht 9 bestehenden Randbereiche 13 erleichtern die Montierbarkeit der Membran 8 an der Filterplatte 1 und verbessern auch die Elastizität der Membran 8 während des Betriebs der Filterplatte 1.

Mit der Erfindung lässt sich die erfindungsmäßige Filterplatte 1 leichter fertigen. Infolge der erhöhten Elastizität der Membran 8 können Schrumpfungstoleranzen ausgeglichen werden, welche bei der Fertigung auftreten. Die Materialschrumpfung bei der Fertigung ist nämlich zeitabhängig. Auch ist zu berücksichtigen, dass die Membran während der Pressarbeit einer gewissen Schrumpfung ausgesetzt ist. Schließlich ist die Montierbarkeit erleichtert. Infolge der verbesserten Elastizität der Membran 8 ist ein Toleranzausgleich von vornherein realisiert.

### Bezugszeichenliste

- 1: Filterplatte
- 2: Plattenrand
- 3: Filtratbohrung
- 4: Kammerboden
- 5: Plattenquerrichtung
- 6: Stütznocke
- 7: Formvorsprung
- 8: Membran
- 9: Trägerschicht
- 10: Plattenlängsrichtung
- 11: Funktionsschicht
- 12: Noppe
- 13: Randbereich

## Patentansprüche

1. Membranfilterplatte (1) für eine Filterpresse mit einer an der Filterplatte (1) fixierten Membran (8), die aus einer elastischen Trägerschicht (9) und einer von der elastischen Trägerschicht (9) verschiedenen Funktionsschicht (11) besteht,
**dadurch gekennzeichnet,**
**dass** die Membran (8) funktionsschichtfreie Randbereiche (13) aufweist und einen mit der Funktionsschicht (11) versehenen zentralen Bereich, wobei die Funktionsschicht aus einem harten, resistenten Material besteht.

2. Filterplatte (1) nach Anspruch 1,
**dadurch gekennzeichnet,**
**dass** die Funktionsschicht (11) aus einem harten Thermoplast besteht.

3. Filterplatte (1) nach Anspruch 1 oder 2,
**dadurch gekennzeichnet,**
**dass** die Funktionsschicht (11) aus einem temperaturbeständigen Werkstoff besteht.

4. Filterplatte (1) nach einem der vorhergehenden Ansprüche,
**dadurch gekennzeichnet,**
**dass** die Funktionsschicht (11) aus einem hochfesten Werkstoff besteht.

5. Filterplatte (1) nach einem der vorhergehenden Ansprüche,
**dadurch gekennzeichnet,**
**dass** die Funktionsschicht (11) aus einem chemisch hochresistenten Werkstoff besteht.

6. Filterplatte (1) nach einem der vorhergehenden Ansprüche,
**dadurch gekennzeichnet,**
**dass** die Funktionsschicht (11) auf die Trägerschicht (9) aufgeschweißt ist.

7. Filterplatte (1) nach einem der vorhergehenden Ansprüche,
**dadurch gekennzeichnet,**
**dass** die Membran (8) formschlüssig mit Hilfe von Formvorsprüngen (7) nach Art einer Nut-Feder-Verbindung an der Filterplatte (1) fixiert ist.

## Claims

1. A diaphragm filter plate (1) for a filter press, having a diaphragm (8) which is fixed on the filter plate (1) and which consists of an elastic carrier layer (9), and a functional layer (11) different from the elastic carrier layer (9),
**characterized in**
**that** the diaphragm (8) includes marginal areas (13), which are free of the functional layer, and a central area provided with the functional layer (11), the functional layer consisting of a hard, resistant material.

2. The filter plate (1) of claim 1,
**characterized in**
**that** the functional layer (11) consists of a hard thermoplastic.

3. The filter plate (1) of claim 1 or 2,
**characterized in**
**that** the functional layer (11) consists of a temperature-resistant material.

4. The filter plate (1) of any of the preceding claims,
**characterized in**
**that** the functional layer (11) consists of a high-strength material.

5. The filter plate (1) of any of the preceding claims,
**characterized in**
**that** the functional layer (11) consists of a chemically highly resistant material.

6. The filter plate (1) of any of the preceding claims,
**characterized in**
**that** the functional layer (11) is welded onto the carrier layer (9).

7. The filter plate (1) of any of the preceding claims,
**characterized in**
**that** the diaphragm (8) is fixed on the filter plate (1) with positive fit by means of shaped projections (7) in the manner of a tongue-and-groove joint.

## Revendications

1. Plaque filtrante à diaphragme (1) pour une filtre-presse, ayant un diaphragme (8) qui est fixé à la plaque filtrante (1) et qui consiste en une couche de support élastique (9) et en une couche fonctionnelle (11) différente de la couche de support élastique (9),
**caractérisée en ce**
**que** le diaphragme (8) comprend des zones marginales (13), qui sont libres de la couche fonctionnelle, et une zone centrale munie de la couche fonctionnelle (11), la couche fonctionnelle consistant d'une matière dure, résistante.

2. Plaque filtrante (1) selon la revendication 1,
**caractérisée en ce**
**que** la couche fonctionnelle (11) consiste en une matière thermoplastique dure.

3. Plaque filtrante (1) selon la revendication 1 ou 2,
**caractérisée en ce**
**que** la couche fonctionnelle (11) consiste en une matière résistante à chaud.

4. Plaque filtrante (1) selon l'une quelconque des revendications précédentes,
**caractérisée en ce**
**que** la couche fonctionnelle (11) consiste en une matière à haute rigidité.

5. Plaque filtrante (1) selon l'une quelconque des revendications précédentes,
**caractérisée en ce**
**que** la couche fonctionnelle (11) consiste en un matériau de haute résistance chimique.

6. Plaque filtrante (1) selon l'une quelconque des revendications précédentes,
**caractérisée en ce**
**que** la couche fonctionnelle (11) est soudée sur la couche de support (9).

7. Plaque filtrante (1) selon l'une quelconque des revendications précédentes,
**caractérisée en ce**
**que** le diaphragme (8) est fixé à la plaque filtrante (1) à engagement positif à l'aide de saillies formées (7) de la manière d'un assemblage à rainure et languette.
